Europäisches Patentamt

European Patent Office

Office européen des brevets

(11) Publication number: **0 202 942**
**B1**

(12) **EUROPEAN PATENT SPECIFICATION**

(45) Date of publication of patent specification: **04.04.90**

(21) Application number: **86303897.2**

(22) Date of filing: **22.05.86**

(60) Divisional application 88113480 filed on 19.08.88.

(51) Int. Cl.⁵: **B 43 K 21/00**

(54) Lead cartridge with an openable capping structure.

(30) Priority: **23.05.85 JP 75697/85**

(43) Date of publication of application:
**26.11.86 Bulletin 86/48**

(45) Publication of the grant of the patent:
**04.04.90 Bulletin 90/14**

(84) Designated Contracting States:
**AT BE CH DE FR GB IT LI LU NL SE**

(56) References cited:
**FR-A-2 493 769**
**GB-A- 14 277**
**GB-A- 372 116**
**JP-U-54 051 052**
**US-A-2 620 098**

(73) Proprietor: **KOTOBUKI & CO., LTD.**
**13 Nishi Kurisu-cho Shichiku Kita-ku**
**Kyoto-shi Kyoto (JP)**

(72) Inventor: **Kageyama, Hidehei c/o Kotobuki &**
**Co. Ltd.**
**Kawagoe Factory 138 Inutake, Aza Kujirai,**
**Ooaza**
**Kawagoe-shi Saitama-ken (JP)**
Inventor: **Mitsuya, Yoshihide c/o Kotobuki &**
**Co. Ltd.**
**Kawagoe Factory 138 Inutake, Aza Kujirai,**
**Ooaza**
**Kawagoe-shi Saitama-ken (JP)**

(74) Representative: **Kirk, Geoffrey Thomas et al**
**BATCHELLOR, KIRK & EYLES 2 Pear Tree Court**
**Farringdon Road**
**London EC1R 0DS (GB)**

Courier Press, Leamington Spa, England.

## Description

The present invention relates to a lead cartridge with an openable capping structure for a so-called cartridge type mechanical pencil.

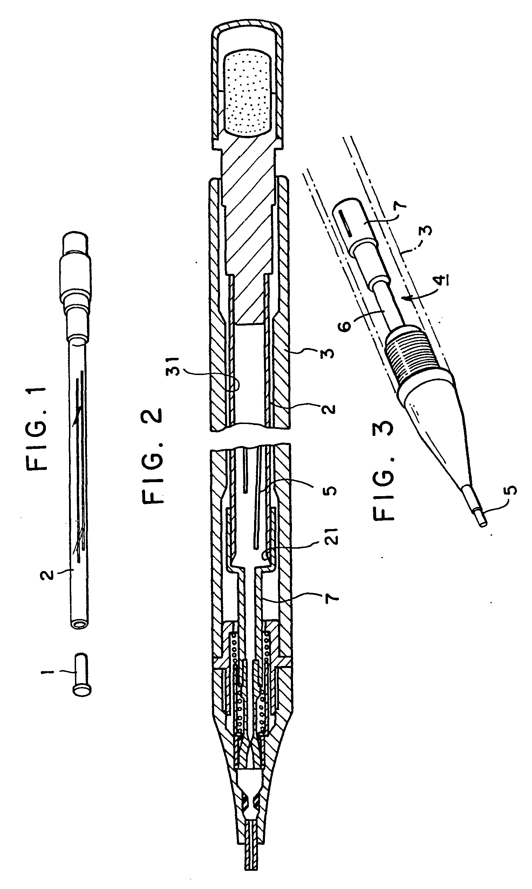

Recently, there has been proposed a so-called cartridge type mechanical pencil in which the lead cartridge, such as illustrated in Figures 1 and 2, is changed for another one, for changing the leads being used for other leads or for replenishing the mechanical pencil with leads, instead of changing or supplying the leads individually, so that the leads are changed for different leads or the mechanical pencil can be replenished with leads without soiling the hands.

In changing or supplying leads to the conventional cartridge type mechanical pencil, a cap 1 which covers the open end of a lead cartridge 2 is removed and thrown away, and then the lead cartridge 2 is fitted in the cylinder of the mechanical pencil with the front end open. Accordingly, the leads contained in the lead cartridge are liable to fall out of the lead cartridge 2 if the open end of the lead cartridge is directed downwards even slightly. Therefore, in fitting the cartridge into the cylinder, the lead cartridge must be held with the open end thereof directed upwards and must be fitted carefully into the cylinder of the mechanical pencil.

On the other hand, in removing the lead cartridge 2 from the cylinder, the leads slip out of the lead cartridge 2 if the open end of the lead cartridge is directed downwards even slightly and, hence, remain in the cylinder.

Furthermore, as illustrated in Figure 2, the conventional mechanical pencil accommodates the lead cartridge 2 containing a plurality of leads, and a lead guide 7 detachably holding the lead cartridge 2 in the cylinder 3 thereof, and the residual leads are returned into the lead cartridge 2 in removing the lead cartridge from the cylinder 3. Therefore, the inner surface of the open end of the lead cartridge 2 needs to be tapered to form a taper surface 21 and an inner contraction needs to be formed in a portion of the cylinder 3, so that the inside diameter of the cylinder is reduced partly in a portion corresponding to the inner contraction 31 limiting the outside diameter of the lead cartridge 2, and thereby the capacity of the lead cartridge 2 is reduced. Furthermore, since it is impossible to form such a cylinder 3 having such an inner contraction 31 through extrusion moulding, the cylinder 3 needs to be formed through injection moulding, which requires a moulding die which is more expensive than that for extrusion moulding.

P—U—54 51052 discloses a pencil cartridge having a simple resiliently deformable obstruction mounted in one end to prevent the leads contained therein from inopportune expulsion. The obstruction is provided with a substantially axial orifice which, when the cartridge is inserted in the pencil, is expanded by the intrusion therein of a projection provided in the lead guide. Thus, the orifice is opened sufficiently to allow the passage therethrough of a single pencil lead which is received in a channel in the projection into the lead guide.

According to the present invention, there is provided a lead cartridge for a mechanical pencil including a lead guide and comprising a cartridge body providing an enclosure for the storage therein of a plurality of leads, a capping structure part located at an open end of the body, the end being removably receivable into a complementary passage in said lead guide whereupon a tongue part of the structure is resiliently displaced to open a capping structure passage, allowing the transfer of a single lead from the body into a lead supply passage in the lead guide, known from JP—U—54051052, characterised in that a first bearing surface is provided on the tongue part and, a second bearing surface is provided inside the passage facing towards the axis of the passage, said bearing surfaces being relatively inclined for engagement with one with the other on reception of the end in the passage to displace the tongue part and thereby open the capping structure passage.

Preferred embodiments of the invention will now be described, by way of example and with references to the accompanying drawings, wherein:

Figure 3 is a fragmentary schematic perspective view of a lead projecting mechanism with which a lead cartridge embodying the present invention is combined;

Figures 4 and 5 are longitudinal sectional views of a first embodiment of the present invention;

Figures 6 and 7 are end view of the openable capping structure of the first embodiment, respectively;

Figure 8 is a longitudinal sectional view of a variation of the first embodiment; and

Figures 9 and 10 are longitudinal sectional views of a second embodiment of the present invention.

Figure 3 shows part of a lead projecting mechanism 4 provided within the outer cylinder 3 of a mechanical pencil, a lead guide 7 is fitted on the rear end of a lead chuck 6. A chuck coupling may be provided between the lead chuck 6 and the lead guide 7.

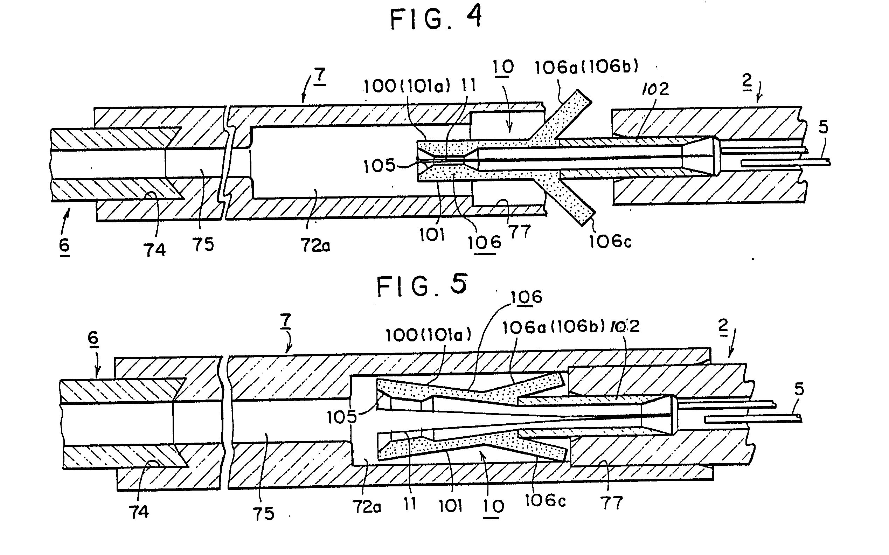

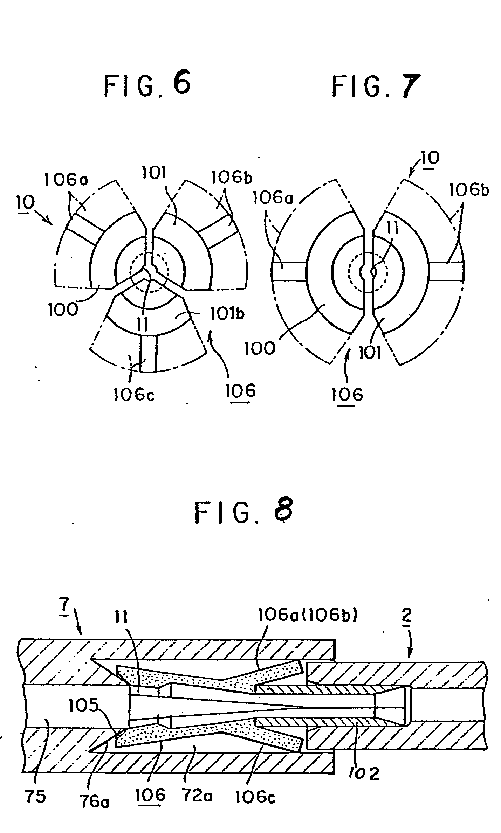

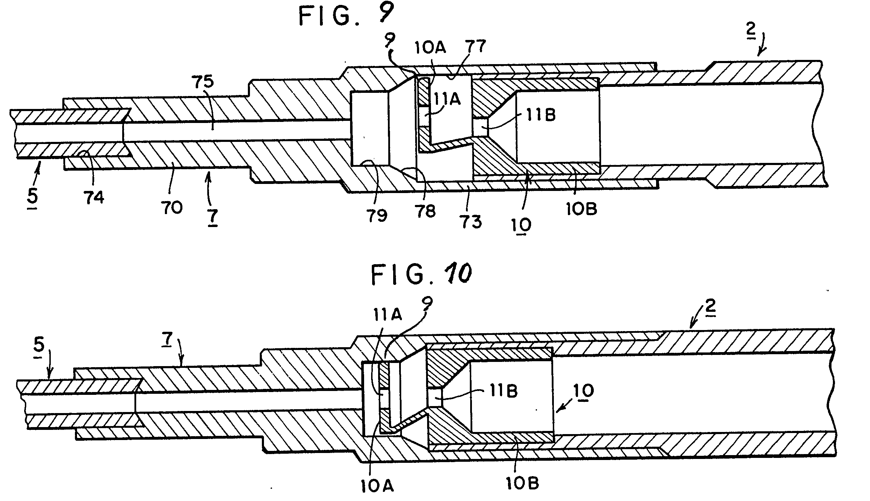

Figures 4 to 8 illustrate the first embodiment of the present invention. An openable capping structure 10 employed in the first embodiment has a rear portion 102 to be fitted in a lead cartridge 2 and three chucking tongues 100, 101 and 101a (Figure 6) or two chucking tongues 100 and 101 (Figure 7) formed by radially slotting a front portion. The chucking tongues 100, 101 (and 101a) have a tendency to bend elastically radially inward and are capable of being radially warped outward to form a lead passage 11 capable of allowing the lead 5 having a different diameter as well as those having the the same diameter to pass therethrough. That is, when the openable capping structure 10 is to be used for lead cartridges 2 containing leads having the same specific diameter, the openable capping structure 10 is designed so that the lead passage 11 is opened in a diameter allowing only leads having a specific diameter, for example, 0.5 mm, 0.7 mm or 0.9 mm., when the respective oblique extensions (first bearing surface) 106a and 106b (and 106c) of the chucking tongues 100, 101 (and 101a) engage the inner circumference of the chucking tongue receiving hole 72a of a lead guide 7, and when the openable capping structure 10 is to be used for lead cartridges 2 each containing leads having a diameter different from those of the leads contained in the other lead cartridges 2, the lead passage 11 is opened in a diameter allowing all kinds of the leads having different diameters, for example, 0.5 mm and 0.7 mm, to pass therethrough when the oblique extensions (first bearing surface) 106a and 106b (and 106c) engage the inner circumference of the chucking tongue receiving hole 72a of the lead guide 7, the receiving hole 72a having a second bearing surface, and the lead passage 11 is narrowed in a diameter capable of inhibiting the passage of the leads having any diameter.

The front end of the lead passage 11 is tapered rearward to form a taper surface 105. The oblique extensions 106a and 106b (and 106c) are formed integrally with the chucking tongues 100 and 101 (and 101a), respectively, so as to extend obliquely rearward. The diameter of a circle passing the outer end of the oblique extensions 106a and 106b (and 106c) is greater than the diameter of the chucking tongue receiving hole 72a, 77 of the lead guide 7. When the chucking tongues 100 and 101 (and 101a) are pushed into the chucking tongue receiving hole 72a, 77 of the lead guide 7, the oblique extensions 106a and 106b (and 106c) engage the inner circumference of the chucking tongue receiving hole 72a, 77 elastically and are compressed radially inward, so that the chucking tongues 100 and 101 (and 101a) are warped radially outward to open the lead passage 11. When the oblique extensions 106a and 106b (and 106c) are disengaged from the chucking tongue receiving hole 72a, 77 of the lead guide 7, the chucking tongues 100 and 101 (and 101a) are allowed to be restored to their original positions by their own resilience to close the lead passage 11.

Thus, when the oblique extensions 106a, 106b and 106c formed integrally with the chucking tongues 100, 101 and 101a, respectively, engage the lead guide 7, the lead passage 11 is opened while, when the oblique extensions 106a, 106b and 106c are disengaged from the lead guide 7, the lead passage 11 is closed.

Figure 8 illustrates a variation of the first embodiment. In this variation, a taper projection 76a tapered rearward is formed in the front end of the chucking tongue receiving hole 72a of the lead guide 7. The small end of the taper projection 76a is slightly smaller than the diameter of the lead passage 11 when closed. When the lead cartridge 2 is inserted into the outer cylinder 3 of a mechanical pencil, the taper surface 105 of the lead passage 11 engages the taper projection 76a, while the oblique extensions 106a, 106b and 106c engage the inner circumference of the chucking tongue receiving hole 72a of the lead guide 7, and thereby lead passage opening action is further ensured.

Figures 9 and 10 illustrate a second embodiment of the present invention. A lead guide 7 to be used in combination with the second embodiment has a front cylindrical portion 70 and a rear cylindrical portion 73 extending coaxially with the front cylindrical portion 70, as illustrated in Figures 9 and 10. The lead guide 7 is designed to feed leads 5 one by one. A lead chuck receiving hole 74 for receiving the rear end of a lead chuck 6 is formed in the front end of the front cylindrical portion 70, and a lead guide passage 75 having a diameter allowing the passage of only one lead 5 at a time is formed through the front cylindrical portion 70 coaxially with the lead chuck receiving hole 75. A lead cartridge receiving hole 77 having a second bearing surface is formed in the rear end of the rear cylindrical portion 73. A taper surface 78 for guiding a lead stopping disk 10A, which will be described later, and a cylindrical surface 79, for locating the lead stopping disk so that the two lead passages 11A and 11B are aligned, are formed in the bottom wall of the lead cartridge receiving hole 77.

Receiving hole (passage) 77 and taper surface 78 form a second bearing surface being engageable with the first bearing surface 9 of the tongue part.

An openable capping structure in the second embodiment is formed of an elastic material, such as a rubber or a synthetic resin, and is fitted in the front end of a lead cartridge 2, in a manner as shown in Figures 9 and 10. The openable capping structure 10 has a cylindrical body (mounting part) 10B provided with the coaxial first lead passage 11B and the lead stopping disk (tongue part) 10A provided with the coaxial second lead passage 11A. Normally, the lead stopping disk 10A is dislocated relative to the cylindrical body 10B so that the first lead passage 11B and the second lead passage 11A disagree with each other. The lead stopping disk 10A is connected to the cylindrical body 10B by an arm obliquely extending from cylindrical body 10B.

The first lead passage 11b and the second lead passage 11A are formed in size allowing the passage of the leads 5 of the same diameter, such as 0.5 mm, 0.7 mm or 0.9 mm, or in a size allowing the passage of the lead passage of different diameters, such as 0.5 mm and 0.7 mm. That is, the lead passages 11A and 11B having the former size allow the passage of the leads 5 having a specific size, such as 0.5 mm, 0.7 mm or 0.9 mm, when the lead cartridge 2 is joined to the lead guide 7 and thereby the lead passages 11A and 11B are aligned with each other, while the lead passages 11A and 11b having the latter size allow the passage of the leads 5 having different diameters, for example 0.5 mm and 0.7 mm, respectively, when the lead cartridge 2 is joined to the lead guide 7 and thereby the lead passage 11A and 11B are aligned with each other.

Thus, when the lead cartridge 2 is disengaged from the lead guide 7, the lead passages 11A and 11B formed in the lead stopping disk 10A and the cylindrical body 10B, respectively, of the openable capping structure 10 disagree with each other, as shown in Figure 9, so that the leads 5 are unable to pass through the lead passages 11A and 11B.

When the lead cartridge 2 joined to the lead guide 7, as shown in Figure 10, is separated, together with the openable capping structure 10, from the lead guide 7 to change the lead cartridge 2 for a new one or to inspect the lead, the lead stopping disk 10A is deviated relative to the cylindrical body 10B by the resilience of the arm interconnecting the lead stopping disk 10A and the cylindrical body 10B to a position shown in Figure 9. Consequently, the lead passages 11A and 11B disagree with each other to inhibit the passage of the lead 5 therethrough. Thus, the second embodiment has the same effect as that of the foregoing embodiment.

As is apparent from what has been described hereinbefore, the lead cartridge according to the previously described embodiments of the present invention is provided with an openable capping structure having chucking tongues which are warped radially outward to open a lead passage when the lead cartridge is joined elastically to the lead guide of a mechanical pencil and are restored to the original position by their own resilience and/or a compressive member to close the lead passage when the lead cartridge is separated from the lead guide. Accordingly, there is no possibility of the leads contained in the lead cartridge falling out of the lead cartridge in replacing the lead cartridge and, furthermore, the lead remaining in the mechanical pencil can be chucked by the chucking tongues and can be withdrawn from the mechanical pencil. Therefore, the breakage of the lead remaining within the mechanical pencil and the clogging of the lead chuck of the mechanical pencil with the broken pieces of the lead does not occur and the lead cartridge can be very simply and easily replaced.

Furthermore, the openable capping structure described is applicable to lead cartridges for containing leads having different diameters as well as to lead cartridges for containing leads having the same diameter, and does not include any any part to be thrown away. Furthermore, since the outer cylinder of a mechanical pencil to be used in combination with the lead cartridge of the present invention need not have any inner contraction, the outer cylinder can be formed through extrusion moulding and a lead cartridge having an increased capacity can be inserted in the outer cylinder.

## Claims

1. A lead cartridge for a mechanical pencil including a lead guide (7) and comprising a cartridge body (2) providing an enclosure for the storage therein of a plurality of leads, a capping structure part (10) located at the open end of the body (2), the end being removably receivable into a complementary passage (77) in said lead guide (7) whereupon a tongue part of the structure (10) is resiliently displaced to open a capping structure passage, allowing the transfer of a single lead from the body (2) into a lead supply passage (75) in the lead guide (7), characterised in that a first bearing surface (106a, b, c) is provided on the tongue part and, a second bearing surface is provided inside the passage (77) facing towards the axis of the passage (77), said bearing surfaces being relatively inclined for engagement one with the other on reception of the end in the passage (77), to displace the tongue part and thereby open the capping structure passage.

2. A cartridge according to claim 1, characterised in that the structure (10) has at least two tongue parts (100, 101) and the first bearing surface of each tongue part (100, 101) is provided by an oblique extension part (106a, 106b) which project radially outwardly from each tongue part, whereby engagement of the bearing surfaces causes displacement of the tongue parts (100, 101) by a lever action.

3. A cartridge according to claim 1, characterised in that the structure (10) comprises a mounting part (10b) whereby the open end is provided with a first aperture (11b) and a tongue part (10a) displaceably resiliently mounted and biased to normally obstruct the first aperture (11b), and being displaced by engagement of the bearing surfaces to bring a second aperture (11a) provided therein into alignment with the first aperture (11b) to remove the obstruction and permit the passage of a lead through the apertures.

## Patentansprüche

1. Minenpatrone für einen Druckbleistift mit einer Minenführung (7) und einem Patronenkörper (2), der ein Gehäuse zur Aufnahme einer Vielzahl von Minen bildet, mit einem kappenförmigen Bauteil (10), das am offenen Ende des Körpers (2) angeordnet ist, wobei das Ende in einem komplementären Kanal (77) der Minenführung (7) hineinbewegbar ist, worauf ein zungenähnliches Teil des Bauteiles (10) nachgiebig auslenkbar ist, um einen Kanal im kappenförmigen Bauteil zu öffnen, wodurch eine einzelne Mine aus dem Körper (2) in einen Minenzuführkanal (75) durch Minenführung (7) überführbar ist, dadurch gekennzeichnet, daß ein erste Anlagefläche (106 a, b, c) auf dem zungenähnlichen Teil und eine zweite Anlagefläche innerhalb des Kanals (77) vorgesehen sind, die zur Achse des Kanals (77) zeigen, wobei die Anlageflächen relativ zueinander geneigt sind zum Aneinanderanlegen bei Aufnahme des Endes in Kanal (77), um das zungenähnliche Teil auszulenken und dadurch den Kanal des kappenförrmigen Bauteiles zu öffnen.

2. Minenpatrone nach Anspruch 1, dadurch gekennzeichnet, daß das Bauteil (10) wenigstens zwei zungenähnliche Teile (100, 101) aufweist und die erste Anlagefläche jedes zungenähnlichen Teils (100, 101) durch ein schräges Verlänngerungsteil (106a, 106b) gebildet wird, das radial auswärts von jedem zungenähnlichen Teil absteht, wodurch der Angriff der Anlageflächen, eine Auslenkung der zungenähnlichen Teile (100, 101) durch Hebelwirkung bewirkt.

3. Minenpatrone nach Anspruch 1, dadurch gekennzeichnet, daß das Bauteil (10) einen Montageteil (10b) umfaßt und daß das offene Ende mit einer ersten Öffnung (116) und einem zungenähnlichen Teil (10a) versehen ist, das nachgiebig auslenkbar angeordnet und vorgespannt ist, um normalerweise die erste Öffnung (11b) zu verdekken, und das durch Anlage der Anlageflächen auslenkbar ist, um eine zweite, darin ausgebildete Öffnung (11a) in Ausrichtung mit der ersten Öffnung (11b) zu bringen, um so die Überdeckung zu beseitigen und den Durchgang einer Mine durch die Öffnungen zu gestatten.

**Revendications**

1. Cartouche à mines pour un porte-mines ou un crayon mécanique incluant un guide-mines (7) et comprenant une cartouche dont le corps (2) constitue une enceinte pour conserver un certain nombre de mines de crayon, une structure de capuchon (10) placée à l'extrémité ouverte du corps (2) dont l'extrémité est reçue de façon amovible dans un passage complémentaire (77) dudit guide-mines (7), ce qui a pour conséquence qu'une partie formant languette de cette structure (10) est déplacée élastiquement et ouvre passage qui permet le transfert d'une seule mine entre le corps (2) et un passage d'alimentation (75) prévu dans le guide-mines, comme il est connu par la publication JP—U—54 051 052, est caractérisée par une première portée (106a, b, c) prévue sur la languette et par une seconde portée prévue à l'intérieur du passage (77) orientée vers l'axe de ce dernier (77), lesdites portées étant inclinées entre elles de façon à venir au contact l'une de l'autre quand elles sont reçues dans l'extrémité du passage (77) afin de déplacer la languette, en ouvrant ainsi le passage de la structure de capuchon.

2. Cartouche selon la revendication 1, caractérisée en ce que la structure (10) possède, au moins, deux languettes (100, 101) et en ce que la première portée de chaque languette (100, 101) est constituée par un prolongement oblique (106a, 106b) qui s'avance radialement vers l'extérieur sur chaque languette, ce qui fait que le contact avec lesdites portées provoque un déplacement desdites portées (100, 101) par une action de levier.

3. Cartouche selon la revendicaton 1, caractérisée en ce que la structure (10) comprend un élément de montage (10b), ce qui fait que l'extrémité ouverte comporte une première ouverture (11b) et une languette (10a) montée élastiquement déplaçable et précontrainte pour obstruer normalement la première ouverture (11b), et qui est déplacée par un contact avec lesdites portées de façon à amener une second ouverture (11a) dans l'alignement de la première ouverture (11b) de façon à supprimer l'obstruction et à permettre à une mine de passer dans lesdites ouvertures.

EP 0 202 942 B1

# FIG. 1

1　　2

# FIG. 2

31

7　21　5　　2　3

# FIG. 3

6

7

4

3

5

## FIG. 4

## FIG. 5

EP 0 202 942 B1

# FIG. 6

# FIG. 7

# FIG. 8

FIG. 9

FIG. 10